# EUROPEAN PATENT APPLICATION

(11) **EP 4 667 269 A1**
(43) Date of publication of application: **24.12.2025**
(21) Application number: 25153458.2
(22) Date of filing: 23.01.2025
(51) Int. Cl.: B60K 35/22, G06F 3/14, H04N 21/41, H04W 52/02

(54) **METHOD FOR PROCESSING INTERACTIVE INFORMATION, MEDIUM, PRODUCT, AND ELECTRONIC DEVICE**

(30) Priority: 20.06.2024 CN 202410804616
(71) Applicant: Xiaomi EV Technology Co., Ltd., 100176 Beijing (CN)
(72) Inventor: WANG, Jianzhou, Beijing, 100176 (CN); ZHANG, Xingyuan, Beijing, 100176 (CN); GAO, Yi, Beijing, 100176 (CN)
(74) Representative: Stöckeler, Ferdinand

(57) **Abstract**

The invention relates to a method for processing interactive information, a medium, a product, and an electronic device, and belongs to the technical field of smart cockpits. A display interface (10) of a first electronic device (800) includes at least a target window (100) for displaying a mirror image (40) of a second electronic device (900). The method for processing interactive information applied to the first electronic device (800) includes: controlling (S101), when the second electronic device (900) satisfies a screen lock condition, the target window (100) to enter a screen-off state, where the second electronic device (900) synchronously enters a screen-off state; and displaying (S102) the mirror image (40) by controlling, in response to detecting a touch operation (60) on the target window (100), the target window (100) to exit the screen-off state.

## Description

### TECHNICAL FIELD

The invention relates to the technical field of smart cockpits and particularly relates to a method for processing interactive information, a medium, a product, and an electronic device.

### BACKGROUND

After a picture of a second electronic device (such as a smartphone) is projected onto a display interface of a first electronic device (such as an in-vehicle infotainment terminal and a tablet computer, etc.), a scenario frequently perplexing a user will be encountered.

### SUMMARY

In order to solve the problems in the related art, the invention provides a method for processing interactive information, a medium, a product, and an electronic device.

According to a first aspect of the examples of the invention, a method for processing interactive information is provided. A display interface of a first electronic device includes at least a target window for displaying a mirror image of a second electronic device. The method includes:
controlling, when the second electronic device satisfies a screen lock condition, the target window to enter a screen-off state, where the second electronic device synchronously enters a screen-off state when satisfying the screen lock condition; and
displaying the mirror image by controlling, in response to detecting a touch operation on the target window, the target window to exit the screen-off state.

In some examples, the method further includes:
starting a first virtual screen lock service locally on the first electronic device when the first electronic device is connected to the second electronic device;
controlling the target window to enter the screen-off state includes:
   controlling the target window to enter the screen-off state by calling the first virtual screen lock service.

In some examples, the method further includes:
performing, when the first electronic device is disconnected from the second electronic device, at least one of the following operations:
closing the first virtual screen lock service; or
controlling the target window to stop displaying the mirror image.

Optionally, the method further includes:
sending, in response to detecting the touch operation, a first instruction to the second electronic device, where the first instruction is configured to instruct the second electronic device to exit the screen-off state.

Optionally, the method further includes:
displaying the mirror image by controlling, in response to receiving a second instruction sent by the second electronic device, the target window to exit the screen-off state, wherein the second instruction is configured to instruct the target window to exit the screen-off state.

According to a second aspect of the examples of the invention, a method for processing interactive information is provided. A second electronic device is connected to a first electronic device. A display interface of the first electronic device includes at least a target window for displaying a mirror image of the second electronic device. The method includes:
controlling, when the second electronic device satisfies a screen lock condition, the second electronic device to enter a screen-off state.

Optionally, the method further includes:
starting a second virtual screen lock service locally on the second electronic device when the second electronic device is connected to the first electronic device.

Controlling the second electronic device to enter the screen-off state includes:
controlling the second electronic device to enter the screen-off state by calling the second virtual screen lock service.

Optionally, the method further includes:
performing, when the second electronic device is disconnected from the first electronic device, at least one of the following operations:
closing the second virtual screen lock service; or
controlling, in a case that the second electronic device is in the screen-off state, the second electronic device to enter a screen-locked state.

Optionally, the method further includes:
controlling, in response to receiving a first instruction sent by the first electronic device, the second electronic device to exit the screen-off state. The first instruction is configured to instruct the second electronic device to exit the screen-off state.

Optionally, the method further includes:
unlocking, in response to detecting an unlocking operation on the second electronic device, the second electronic device when the second electronic device is in the screen-off state; and
sending a second instruction to the first electronic device in a case that the second electronic device is successfully unlocked. The second instruction is configured to instruct the target window to exit the screen-off state.

According to a third aspect of the examples of the invention, a computer-readable storage medium is provided. The computer-readable storage medium stores a computer program. When the computer program is executed by a processor, steps of the method provided in the first aspect of the invention or steps of the method provided in the second aspect of the invention are implemented.

According to a fourth aspect of the examples of the invention, a computer program product is provided. The computer program product includes a computer program. When the computer program is executed by a processor, steps of the method provided in the first aspect of the invention or steps of the method provided in the second aspect of the invention are implemented.

According to a fifth aspect of the examples of the invention, a first electric device is provided. The first electronic device includes:
a first processor; and
a first memory configured to store executable instructions of the first processor.

The first processor is configured to execute the executable instructions in the first memory, so as to implement steps of the method provided in the first aspect of the invention.

According to a sixth aspect of the examples of the invention, a second electric device is provided. The second electronic device includes:
a second processor; and
a second memory configured to store executable instructions of the second processor.

The second processor is configured to execute the executable instructions in the second memory, so as to implement steps of the method provided in the second aspect of the invention.

The technical solution provided in the examples of the invention may include beneficial effects: when the second electronic device satisfies the screen lock condition, the target window for displaying the mirror image of the second electronic device in the display interface and the second electronic device enter screen-off states synchronously, that is, enter virtual screen-locked states instead of real screen-locked states. In this way, when needing to operate the first electronic device to view content of the second electronic device, a user only needs to carry out the touch operation on the target window such that the target window can exit the screen-off state and display the mirror image of the second electronic device. Through the method, the user can quickly and conveniently view the content of the second electronic device without an additional unlocking operation on the second electronic device when needed. In addition, during driving, a driver can pay no attention to deal with a screen lock problem of the second electronic device, and can focus more on the driving. In this way, driving safety is enhanced to a certain extent.

It may be understood that the above general descriptions and the following detailed descriptions are illustrative and explanatory, and do not limit the invention.

### BRIEF DESCRIPTION OF DRAWINGS

The accompanying drawings here are incorporated into the description as a constituent part of the description, illustrate examples conforming to the invention, and serve to explain principles of the invention along with the description.
Fig. 1 is a schematic diagram of unlocking a second electronic device in a screen-locked state in the related art;
Fig. 2 is an application scenario diagram according to an example;
Fig. 3 is a flow diagram of a method for processing interactive information applied to a first electronic device according to an example;
Fig. 4 is a flow diagram of unlocking a virtual screen-locked state at a first electronic device according to an example;
Fig. 5 is a flow diagram of unlocking a virtual screen-locked state at a second electronic device according to an example;
Fig. 6 is a flow diagram of exiting a virtual screen-locked state when a second electronic device is disconnected from a first electronic device according to an example;
Fig. 7 is a flow diagram of a method for processing interactive information applied to a second electronic device according to an example;
Fig. 8 is a block diagram of an apparatus for processing interactive information applied to a first electronic device according to an example;
Fig. 9 is a block diagram of an apparatus for processing interactive information applied to a second electronic device according to an example;
Fig. 10 is a block diagram of a vehicle according to an example;
Fig. 11 is a block diagram of a first electronic device according to an example; and
Fig. 12 is a block diagram of a second electronic device according to an example.

### DETAILED DESCRIPTION

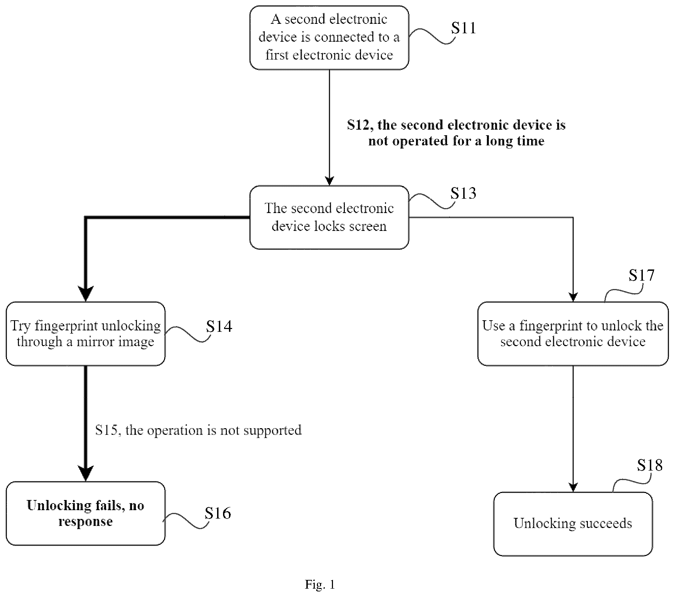

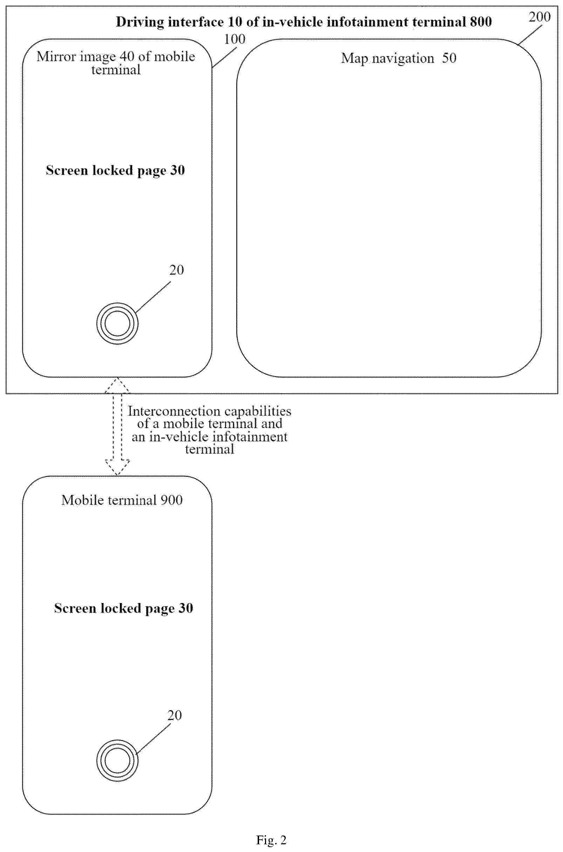

As shown in Fig. 1, when a user does not operate the second electronic device for a long time (S11 and S12), a screen of the second electronic device will be automatically locked (S13). And a mirror image of the second electronic device shown to the user on the display interface (such as a driving interface of the in-vehicle infotainment terminal) of the first electronic device is a screen locked page, such as a screen locked page 30 including a fingerprint unlocking area 20 shown in Fig. 2. In Fig. 2, an example in which the in-vehicle infotainment terminal serves as the first electronic device and a mobile terminal serves as the second electronic device 900 is taken for description. When the mirror image 40 is the screen locked page 30, the user can successfully unlock (S18) the second electronic device by long pressing (S17) the fingerprint unlock area 20 on the screen locked page 30 of the second electronic device 900. However, when the mirror image 40 is the screen locked page 30, the user generally cannot unlock the second electronic device through the display interface 10 of the first electronic device 800. For example, when the user subconsciously long-presses (S14) the fingerprint unlocking area 20 in the mirror image 40, fingerprint unlocking does not work (S15) because no fingerprint sensor is arranged in the fingerprint unlocking area 20. That is, the second electronic device cannot be unlocked (S16) by clicking the fingerprint unlocking area 20 in the mirror image 40.

Examples will be described in detail and illustratively shown in accompanying drawings. When the following descriptions involve accompanying drawings, unless otherwise specified, the identical number in different accompanying drawings denotes the identical or similar elements.

The examples described in the following examples of the invention do not denote all examples consistent with the invention. On the contrary, the examples are instances of apparatuses and methods consistent with some aspects of the invention as detailed in the appended claims.

It may be noted that all actions to acquire signals, information or data in the invention are carried out under the premise of complying with corresponding data protection laws and policies of a country where an apparatus is located, and obtaining authorization from the owner of the corresponding apparatus.

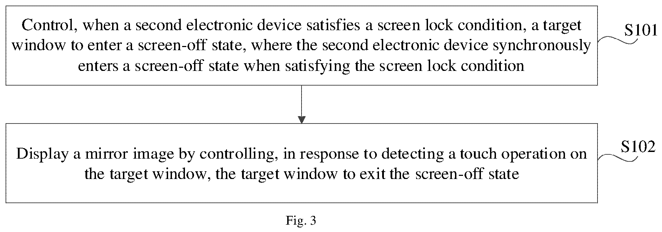

Fig. 3 is a flow diagram of a method for processing interactive information applied to a first electronic device according to an example. As shown in Fig. 3, the method for processing interactive information applied to the first electronic device may include S101 and S102.

In S101, when the second electronic device satisfies a screen lock condition, a target window is controlled to enter a screen-off state. The second electronic device synchronously enters a screen-off state when satisfying the screen lock condition.

In the invention, the first electronic device may be an electronic device such as an in-vehicle infotainment terminal, a tablet computer, a wearable device, and a television. The second electronic device may be a mobile terminal such as a smartphone, and a tablet computer.

The first electronic device may be connected to the second electronic device by a local area network such as Bluetooth or WiFi. The display interface of the first electronic device may include at least one application window. The display interface includes at least the target window for displaying a mirror image of the second electronic device. In an example, as shown in Fig. 2, the display interface 10 of the first electronic device 800 includes two application windows. One window (that is, the target window) 100 is configured to display the mirror image 40 of the second electronic device 900, and the other window 200 is configured to display map navigation 50.

In addition, the second electronic device may monitor in real time whether the second electronic device satisfies the screen lock condition, and send indication information indicating that the second electronic device satisfies the screen lock condition to the first electronic device when the second electronic device satisfies the screen lock condition. After receiving the indication information, the first electronic device determines that the second electronic device satisfies the screen lock condition. At this time, the target window may be controlled to enter the screen-off state. Moreover, when the second electronic device satisfies the screen lock condition, the second electronic device and the target window enter the screen-off states synchronously. That is, the second electronic device and the target window enter virtual screen-locked states.

If the second electronic device detects no operation on the second electronic device within a preset time period, or receives a screen lock instruction (such as a click on a power key) actively triggered by a user, the second electronic device determines that the second electronic device satisfies the screen lock condition.

In S102, the mirror image is displayed by controlling, in response to detecting a touch operation on the target window, the target window to exit the screen-off state.

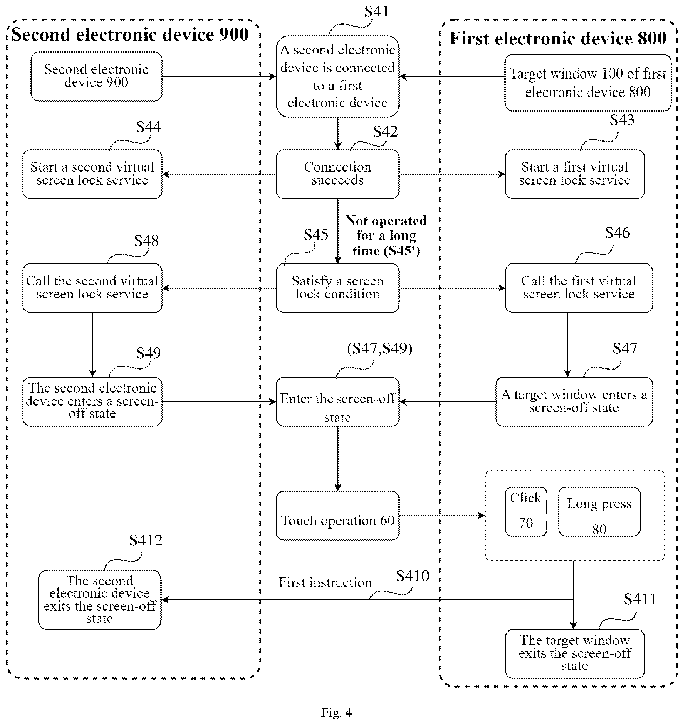

In the invention, as shown in Figure 4, the touch operation 60 may be an operation such as a click 70 (including a single click or a double click), a long press 80, and a slide.

The technical solution provided in an example of the invention may include beneficial effects: when the second electronic device satisfies the screen lock condition, the target window for displaying the mirror image of the second electronic device in the display interface and the second electronic device enter screen-off states synchronously, that is, enter virtual screen-locked states instead of real screen-locked states. In this way, when needing to operate the first electronic device to view content of the second electronic device, a user only needs to carry out the touch operation on the target window such that the target window can exit the screen-off state and display the mirror image of the second electronic device. Through the method, the user can quickly and conveniently view the content of the second electronic device without an additional unlocking operation on the second electronic device when needed. In addition, during driving, a driver can pay no attention to deal with a screen lock problem of the second electronic device, and can focus more on the driving. In this way, driving safety is enhanced to a certain extent.

In a possible example, the above method for processing interactive information applied to the first electronic device may further include steps:
a first virtual screen lock service locally on the first electronic device is started when the first electronic device is connected to the second electronic device.

As shown in Fig. 4, when the first electronic device 800 is connected (S41 and S42) to the second electronic device 900, the first electronic device 800 may start (S43) the first virtual screen lock service locally on the first electronic device 800, and the second electronic device 900 may start (S44) a second virtual screen lock service locally on the second electronic device 900. The first virtual screen lock service is configured to control the target window to enter the virtual screen-locked state (that is, the screen-off state), and the second virtual screen lock service is configured to control the second electronic device 900 to enter the virtual screen-locked state (that is, the screen-off state). In this way, when the second electronic device 900 satisfies (S45) the screen lock condition, the first electronic device 800 may control (S47) the target window to enter the screen-off state by calling (S46) the first virtual screen lock service. Moreover, the second electronic device 900 may control (S49) the second electronic device 900 to enter the screen-off state by calling (S48) the second virtual screen lock service. For example, when the second electronic device 900 is not operated (S45') for a long time, it is determined that the second electronic device 900 satisfies (S45) the screen lock condition.

In a possible example, the above method for processing interactive information applied to the first electronic device may further include steps:
in response to detecting a touch operation on the target window, a first instruction is sent (S410) to the second electronic device.

In the invention, the first instruction is configured to instruct the second electronic device to exit the screen-off state. As shown in Fig. 4, when detecting the touch operation 60 on the target window, the first electronic device 800 controls (S411) the target window to exit the screen-off state, and sends (S410) the first instruction for instructing the second electronic device 900 to exit the screen-off state to the second electronic device 900. After receiving the first instruction, the second electronic device 900 exits (S412) the screen-off state. In this way, the user can control a terminal to exit the virtual screen-locked state by the first electronic device 800.

In a possible example, the above method for processing interactive information applied to the first electronic device may further include steps:
the mirror image is displayed by controlling, in response to receiving a second instruction sent by the second electronic device, the target window to exit the screen-off state. The second instruction is configured to instruct the target window to exit the screen-off state.

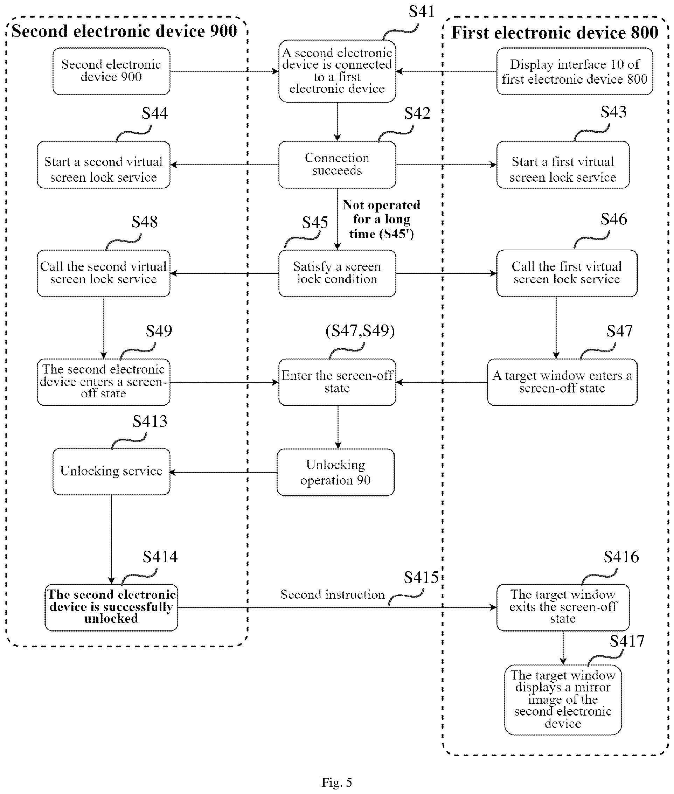

In the invention, after the second electronic device and the target window of the first electronic device synchronously enter the screen-off states, the user may wake up the second electronic device by the first electronic device, or wake up the target window of the first electronic device by the second electronic device, so as to display the mirror image of the second electronic device. Specifically, as shown in Fig. 5, when the second electronic device 900 is in the screen-off state, the second electronic device 900 unlocks (S413) the second electronic device 900 in response to detecting an unlocking operation 90 on the second electronic device 900. If the second electronic device 900 is successfully unlocked (S414), the second instruction is sent (S415) to the first electronic device 800.

When the second electronic device is in the screen-off state, the user may unlock the second electronic device through face recognition, fingerprint recognition, password unlocking, etc. As shown in Fig. 5, if the second electronic device 900 is successfully unlocked (S414), the second instruction for instructing the target window to exit the screen-off state is sent (S415) to the first electronic device 800. After receiving the second instruction, the first electronic device 800 displays (S417) the mirror image of the second electronic device 900 by controlling (S416) the target window to exit the screen-off state.

In a possible example, the above method for processing interactive information applied to the first electronic device may further include steps:
when the first electronic device is disconnected from the second electronic device, at least one of the following operations is executed:
the first virtual screen lock service is closed; or
the target window is controlled to stop displaying the mirror image.

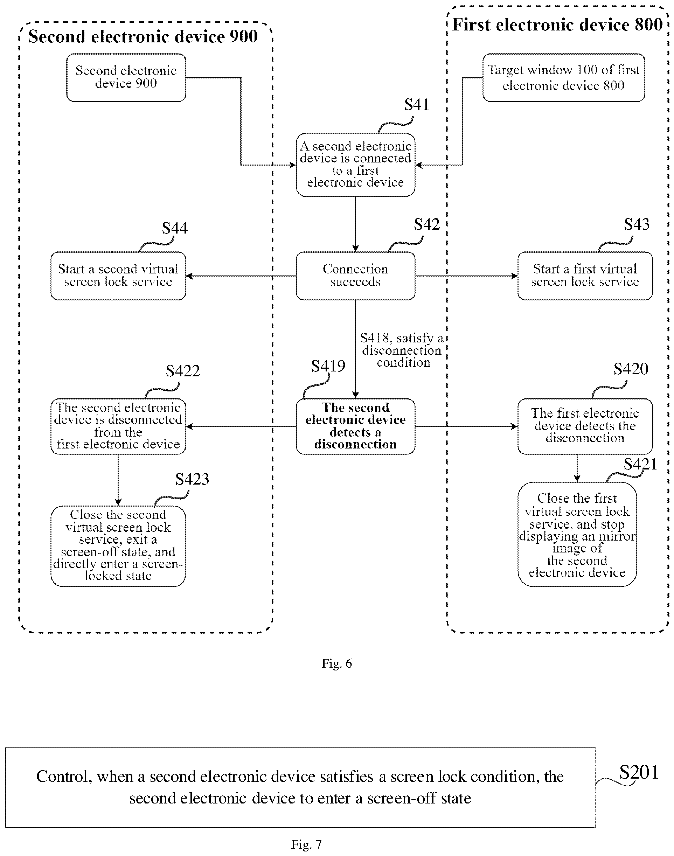

In the invention, as shown in Fig. 6, if the first electronic device 800 detects that a distance between the second electronic device 900 and the first electronic device 800 is greater than a preset distance threshold, or receives a third instruction for indicating a disconnection from the second electronic device 900, it is determined that a disconnection condition is satisfied (S418). At this time, the first electronic device 800 can be disconnected (S419) from the second electronic device 900. If the first electronic device 800 detects (S420) that the second electronic device 900 is disconnected from the first electronic device 800, in order to reduce energy consumption, the first virtual screen lock service may be closed (S421). In addition, when the first electronic device 800 is disconnected from the second electronic device 900, the target window cannot continuously display the mirror image of the second electronic device 900. At this time, the target window can be controlled (S421) to stop displaying the mirror image.

Fig. 7 is a flow diagram of a method for processing interactive information applied to a second electronic device according to an example. The second electronic device is connected to the first electronic device, and the display interface of the first electronic device includes at least a target window for displaying a mirror image of the second electronic device. As shown in Fig. 7, the method for processing interactive information applied to the second electronic device may include steps:

In S201, when the second electronic device satisfies the screen lock condition, the second electronic device is controlled to enter a screen-off state.

The technical solution provided in an example of the invention may include beneficial effects: when the second electronic device satisfies the screen lock condition, the target window for displaying the mirror image of the second electronic device in the display interface and the second electronic device enter screen-off states synchronously, that is, enter virtual screen-locked states instead of real screen-locked states. In this way, when needing to operate the first electronic device to view content of the second electronic device, a user only needs to carry out the touch operation on the target window such that the target window can exit the screen-off state and display the mirror image of the second electronic device. Through the method, the user can quickly and conveniently view the content of the second electronic device without an additional unlocking operation on the second electronic device when needed. In addition, during driving, a driver can pay no attention to deal with a screen lock problem of the second electronic device, and can focus more on the driving. In this way, driving safety is enhanced to a certain extent.

In some examples, the method for processing interactive information applied to the second electronic device further includes:
a second virtual screen lock service locally on the second electronic device is started when the second electronic device is connected to the first electronic device.

The step that the second electronic device is controlled to enter the screen-off state includes:
the second electronic device is controlled to enter the screen-off state by calling the second virtual screen lock service.

In some examples, the method for processing interactive information applied to the second electronic device further includes:
when the second electronic device is disconnected (S422) from the first electronic device, at least one of the following operations is executed:
the second virtual screen lock service is closed (S423); or
in a case that the second electronic device is in the screen-off state, the second electronic device is controlled (S423) to enter a screen-locked state.

In some examples, the method for processing interactive information applied to the second electronic device further includes:
in response to receiving a first instruction sent by the first electronic device, the second electronic device is controlled to exit the screen-off state. The first instruction is configured to instruct the second electronic device to exit the screen-off state.

In some examples, the method for processing interactive information applied to the second electronic device further includes:
the second electronic device is unlocked in response to detecting an unlocking operation on the second electronic device when the second electronic device is in the screen-off state; and
a second instruction is sent to the first electronic device in a case that the second electronic device is successfully unlocked. The second instruction is configured to instruct the target window to exit the screen-off state.

A specific method through which each step of the above method in an example of the second electronic device executes an operation is described in detail in an example of the method for processing interactive information related to the first electronic device, and will not be described in detail here.

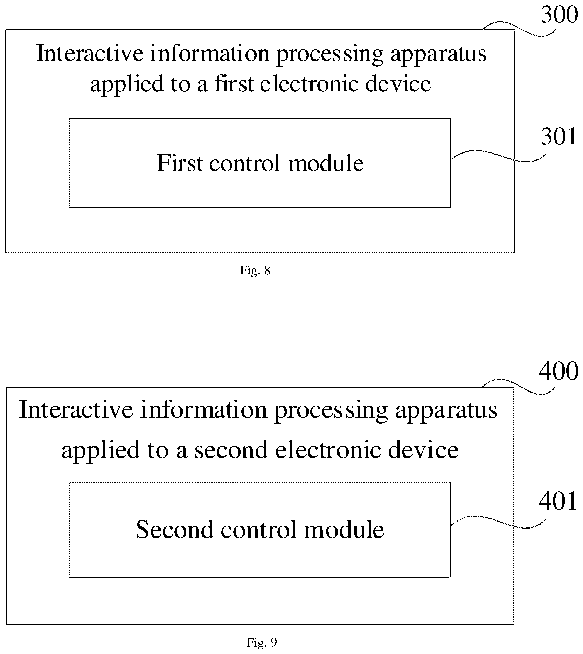

Fig. 8 is a block diagram of an apparatus for processing interactive information applied to a first electronic device according to an example. The display interface of the first electronic device includes at least a target window for displaying a mirror image of the second electronic device. As shown in Fig. 8, the apparatus for processing interactive information 300 applied to the first electronic device includes:
a first control module 301 configured to control, when the second electronic device satisfies a screen lock condition, the target window to enter a screen-off state, where the second electronic device synchronously enters a screen-off state when satisfying the screen lock condition.

The first control module 301 is further configured to display the mirror image by controlling, in response to detecting a touch operation on the target window, the target window to exit the screen-off state.

The technical solution provided in an example of the invention may include beneficial effects: when the second electronic device satisfies the screen lock condition, the target window for displaying the mirror image of the second electronic device in the display interface and the second electronic device enter screen-off states synchronously, that is, enter virtual screen-locked states instead of real screen-locked states. In this way, when needing to operate the first electronic device to view content of the second electronic device, a user only needs to carry out the touch operation on the target window such that the target window can exit the screen-off state and display the mirror image of the second electronic device. Through the method, the user can quickly and conveniently view the content of the second electronic device without an additional unlocking operation on the second electronic device when needed. In addition, during driving, a driver can pay no attention to deal with a screen lock problem of the second electronic device, and can focus more on the driving. In this way, driving safety is enhanced to a certain extent.

In some examples, the apparatus for processing interactive information 300 applied to the first electronic device further includes:
a third control module configured to start a first virtual screen lock service locally on the first electronic device when the first electronic device is connected to the second electronic device.

The first control module 301 is configured to control the target window to enter the screen-off state by calling the first virtual screen lock service.

In some examples, the apparatus for processing interactive information 300 applied to the first electronic device further includes:
a fourth control module configured to execute, when the first electronic device is disconnected from the second electronic device, at least one of the following operations:
the first virtual screen lock service is closed; or
the target window is controlled to stop displaying the mirror image.

In some examples, the apparatus for processing interactive information 300 applied to the first electronic device further includes:
a first sending module configured to send a first instruction to the second electronic device in response to detecting the touch operation. The first instruction is configured to instruct the second electronic device to exit the screen-off state.

In some examples, the first control module 301 is further configured to display the mirror image by controlling, in response to receiving a second instruction sent by the second electronic device, the target window to exit the screen-off state. The second instruction is configured to instruct the target window to exit the screen-off state.

A specific method through which each module of the above apparatus in an example of the first electronic device executes an operation is described in detail in an example of a method related to the first electronic device, and will not be described in detail here.

Fig. 9 is a block diagram of an apparatus for processing interactive information applied to a second electronic device according to an example. The second electronic device is connected to the first electronic device. The display interface of the first electronic device includes at least a target window for displaying a mirror image of the second electronic device. The apparatus 400 for processing interactive information applied to the second electronic device includes:
a second control module 401 configured to control, when the second electronic device satisfies a screen lock condition, the second electronic device to enter a screen-off state.

The technical solution provided in an example of the invention may include beneficial effects: when the second electronic device satisfies the screen lock condition, the target window for displaying the mirror image of the second electronic device in the display interface and the second electronic device enter screen-off states synchronously, that is, enter virtual screen-locked states instead of real screen-locked states. In this way, when needing to operate the first electronic device to view content of the second electronic device, a user only needs to carry out the touch operation on the target window such that the target window can exit the screen-off state and display the mirror image of the second electronic device. Through the method, the user can quickly and conveniently view the content of the second electronic device without an additional unlocking operation on the second electronic device when needed. In addition, during driving, a driver can pay no attention to deal with a screen lock problem of the second electronic device, and can focus more on the driving. In this way, driving safety is enhanced to a certain extent.

In some examples, the apparatus 400 for processing interactive information applied to the second electronic device further includes:
a second starting module configured to start a second virtual screen lock service locally on the second electronic device when the second electronic device is connected to the first electronic device.

The second control module 401 is configured to control the second electronic device to enter the screen-off state by calling the second virtual screen lock service.

In some examples, the apparatus 400 for processing interactive information applied to the second electronic device further includes:
a fifth control module configured to execute, when the second electronic device is disconnected from the first electronic device, at least one of the following operations:
the second virtual screen lock service is closed; or
in a case that the second electronic device is in the screen-off state, the second electronic device is controlled to enter a screen-locked state.

In some examples, the second control module 401 is further configured to control, in response to receiving a first instruction sent by the first electronic device, the second electronic device to exit the screen-off state. The first instruction is configured to instruct the second electronic device to exit the screen-off state.

In some examples, the apparatus 400 for processing interactive information applied to the second electronic device further includes:
a receiving module configured to unlock the second electronic device in response to detecting an unlocking operation on the second electronic device when the second electronic device is in the screen-off state; and
a second sending module configured to send a second instruction to the first electronic device in a case that the second electronic device is successfully unlocked. The second instruction is configured to instruct the target window to exit the screen-off state.

A specific method through which each module of the above apparatus in an example of the second electronic device executes an operation is described in detail in an example of a method related to the second electronic device, and will not be described in detail here.

The invention further provides a computer-readable storage medium. The computer-readable storage medium stores computer program instructions. When the program instructions are executed by a processor, the steps of the method for processing interactive information applied to the second electronic device provided in the invention are implemented.

The invention further provides a computer-readable storage medium. The computer-readable storage medium stores computer program instructions. When the program instructions are executed by a processor, the steps of the method for processing interactive information applied to the first electronic device provided in the invention are implemented.

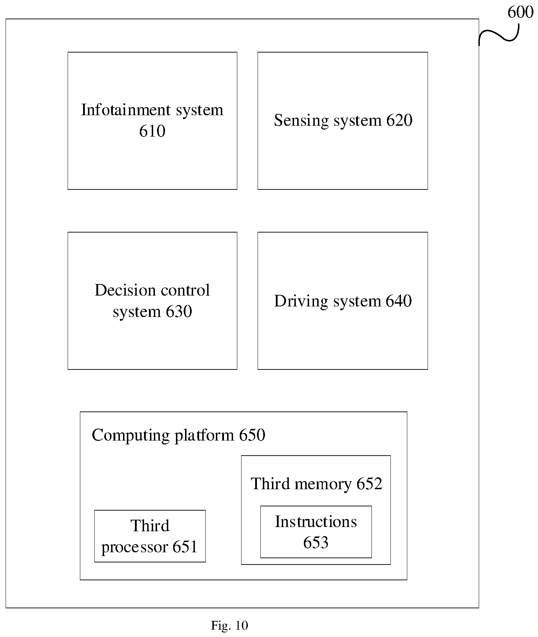

Fig. 10 is a block diagram of a vehicle 600 according to an example. For instance, the vehicle 600 may be a hybrid vehicle, a non-hybrid vehicle, an electric vehicle, a fuel cell vehicle or a different type of vehicle. The vehicle 600 may be an autonomous vehicle, a semi-autonomous vehicle or a non-autonomous vehicle.

With reference to Fig. 10, the vehicle 600 may include various subsystems, such as an infotainment system 610, a sensing system 620, a decision control system 630, a driving system 640 and a computing platform 650. The vehicle 600 may further include more or fewer subsystems. Each subsystem may include a plurality of components. In addition, all subsystems and all components of the vehicle 600 may be connected to each other in a wired or wireless manner.

In some examples, the infotainment system 610 may include a communication system, an entertainment system, a navigation system, etc.

The sensing system 620 may include several types of sensors for sensing information of an environment surrounding the vehicle 600. For instance, the sensing system 620 may include a global positioning system (which may be GPS, a Beidou system or another positioning system), an inertial measurement unit (IMU), a laser radar, a millimeter wave radar, an ultrasonic radar and a photographing apparatus.

The decision control system 630 may include a computing system, a vehicle controller, a steering system, a throttle and a braking system.

The driving system 640 may include components that provide power for the vehicle 600 for motion. In an example, the driving system 640 may include an engine, an energy source, a driving system and wheels. The engine may be one or a combination of an internal combustion engine, an electric motor and an air compression engine. The engine can convert energy provided by the energy source into mechanical energy.

Some or all of the functions of the vehicle 600 are controlled by the computing platform 650. The computing platform 650 may include at least one third processor 651 and at least one third memory 652. The third processor 651 may execute instructions 653 stored in the third memory 652.

The third processor 651 may be any conventional processor, such as a commercially-available central processing unit (CPU). The processor may further include a graphic process unit (GPU), a field programmable gate array (FPGA), a system on chip (SoC), an application specific integrated circuit (ASIC), or their combinations.

The third memory 652 may be implemented by any type of volatile or non-volatile storage devices or their combinations, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, and an optical disk.

In addition to the instructions 653, the third memory 652 may store data, such as a road map, route information, and a position, direction, speed, etc. of the vehicle. The data stored in the third memory 652 may be used by the computing platform 650.

In an example of the invention, the third processor 651 may execute the instructions 653, so as to complete all or some steps of the above method for processing interactive information applied to the first electronic device.

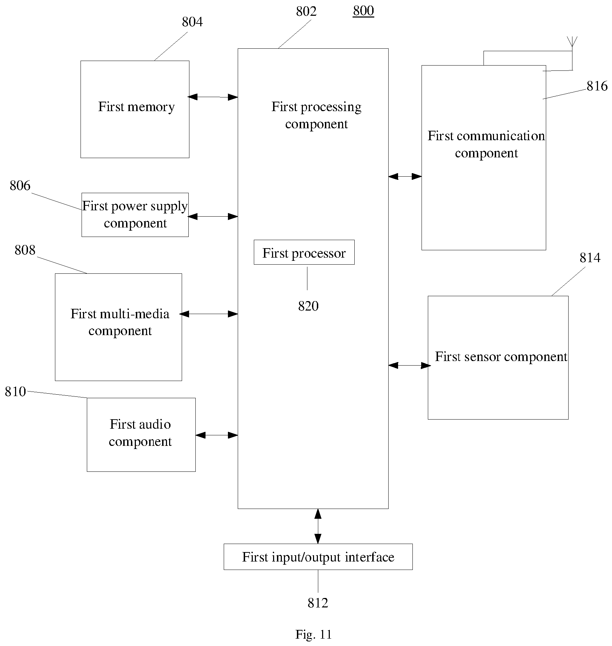

Fig. 11 is a block diagram of a first electronic device 800 according to an example. For instance, the first electronic device 800 may be a mobile phone, a computer, a digital broadcasting terminal, a message receiving and transmitting device, a game console, a tablet device, a medical device, a fitness device, a personal digital assistant, etc.

With reference to Fig. 11, the first electronic device 800 may include one or more of components: a first processing component 802, a first memory 804, a first power supply component 806, a first multi-media component 808, a first audio component 810, a first input/output interface 812, a first sensor component 814, and a first communication component 816.

The first processing component 802 generally controls overall operations of the first electronic device 800, such as operations associated with display, telephone call, data communication, a camera operation, and a record operation. The first processing component 802 may include one or more first processors 820 to execute instructions, so as to complete all or some steps of the above method for processing interactive information applied to the first electronic device. In addition, the first processing component 802 may include one or more modules such that the first processing component 802 can interact with other components. For instance, the first processing component 802 may include a multi-media module such that the first multi-media component 808 can interact with the first processing component 802.

The first memory 804 is configured to store various types of data, so as to support operations at the first electronic device 800. Instances of such data include instructions for any applications or methods operating on the first electronic device 800, contact data, phone book data, messages, pictures, videos, etc. The first memory 804 may be implemented by any type of volatile or non-volatile storage devices or their combinations, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, and an optical disk.

The first power supply component 806 provides power for various components of the first electronic device 800. The first power supply component 806 may include a power supply management system, one or more power supplies, and other components associated with generation, management and power distribution of the first electronic device 800.

The first multi-media component 808 includes a screen that provides an output interface between the first electronic device 800 and a user. In some examples, the screen may include a liquid crystal display (LCD) and a touch panel (TP). If the screen includes the touch panel, the screen can be implemented as a touch screen to receive an input signal from the user. The touch panel includes one or more touch sensors, so as to sense a touch, a swipe and a gesture on the touch panel. The touch sensor can not only sense a boundary of a touch or a swipe, but also measure duration and pressure associated with the touch or the swipe. In some examples, the first multi-media component 808 includes a front-facing camera and/or a rear-facing camera. When the first electronic device 800 is in an operating mode, such as a photographing mode or a video mode, the front-facing camera and/or the rear-facing camera can receive external multi-media data. Each of the front-facing camera and the rear-facing camera may be a fixed optical lens system or have focusing and optical zooming capabilities.

The first audio component 810 is configured to output and/or input an audio signal. For instance, the first audio component 810 includes a microphone (MIC). When the first electronic device 800 is in an operating mode, such as a call mode, a recording mode, and a voice recognition mode, the microphone is configured to receive an external audio signal. The received audio signal may be further stored in the first memory 804 or transmitted by the first communication component 816. In some examples, the first audio component 810 further includes a loudspeaker for outputting the audio signal.

The first input/output interface 812 provides an interface between the first processing component 802 and peripheral interface modules, which may be keyboards, click wheels, buttons, etc. These buttons may include but are not limited to a home button, a volume button, a start button and a lock button.

The first sensor component 814 includes one or more sensors for providing state assessment of various aspects of the first electronic device 800. For instance, the first sensor component 814 may detect an open/closed state of the first electronic device 800, and relative positioning of components, such as a display and a keypad of the first electronic device 800. The first sensor component 814 may further detect a position change of the first electronic device 800 or a component of the first electronic device 800, presence or absence of contact between a user and the first electronic device 800, an orientation or acceleration/deceleration of the first electronic device 800, and a temperature change of the first electronic device 800. The first sensor component 814 may include a proximity sensor configured to detect the presence of a nearby object in the absence of any physical touch. The first sensor component 814 may further include a light sensor, such as a complementary metal oxide semiconductor (CMOS) and a charge coupled device (CCD) image sensor, which are used in imaging applications. In some examples, the first sensor component 814 may further include an acceleration sensor, a gyroscopic sensor, a magnetic sensor, a pressure sensor, or a temperature sensor.

The first communication component 816 is configured to facilitate wired or wireless communication between the first electronic device 800 and other devices. The first electronic device 800 may access a wireless network based on a communication standard, such as WiFi, 2G, 3G, and their combinations. In an example, the first communication component 816 receives a broadcast signal or broadcast related information from an external broadcast management system through a broadcast channel. In an example, the first communication component 816 further includes a near-field communication (NFC) module, so as to promote short-range communication. For instance, the NFC module may be implemented based on a radio frequency identification (RFID) technology, an infrared data association (IrDA) technology, an ultra wideband (UWB) technology, a Bluetooth (BT) technology, and other technologies.

In an example, the first electronic device 800 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, which are configured to execute the above method for processing interactive information applied to the first electronic device.

In an example, a non-transitory computer-readable storage medium including instructions is further provided, such as a first memory 804 including instructions. The above instructions may be executed by the first processor 820 of the first electronic device 800, so as to complete the above method for processing interactive information applied to the first electronic device. For instance, the non-transitory computer-readable storage medium may be an ROM, a random access memory (RAM), a compact disc read-only memory (CD-ROM), a magnetic tape, a floppy disk, an optical data storage device, etc.

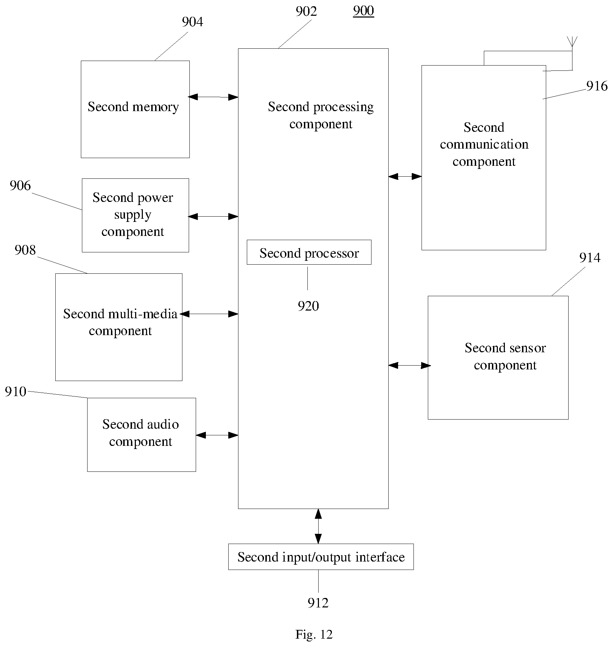

Fig. 12 is a block diagram of a second electronic device 900 according to an example. For instance, the second electronic device 900 may be a mobile phone, a computer, a digital broadcasting terminal, a message receiving and transmitting device, a game console, a tablet device, a medical device, a fitness device, a personal digital assistant, etc.

With reference to Fig. 12, the second electronic device 900 may include one or more of components: a second processing component 902, a second memory 904, a second power supply component 906, a second multi-media component 908, a second audio component 910, a second input/output interface 912, a second sensor component 914, and a second communication component 916.

The second processing component 902 generally controls overall operations of the second electronic device 900, such as operations associated with display, telephone call, data communication, a camera operation, and a record operation. The second processing component 902 may include one or more second processors 920 to execute instructions, so as to complete all or some steps of the above method for processing interactive information applied to the second electronic device. In addition, the second processing component 902 may include one or more modules such that the second processing component 902 can interact with other components. For instance, the second processing component 902 may include a multi-media module such that the second multi-media component 908 can interact with the second processing component 902.

The second memory 904 is configured to store various types of data, so as to support operations at the second electronic device 900. Instances of such data include instructions for any applications or methods operating on the second electronic device 900, contact data, phone book data, messages, pictures, videos, etc. The second memory 904 may be implemented by any type of volatile or non-volatile storage devices or their combinations, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, and an optical disk.

The second power supply component 906 provides power for various components of the second electronic device 900. The second power supply component 906 may include a power supply management system, one or more power supplies, and other components associated with generation, management and power distribution of the second electronic device 900.

The second multi-media component 908 includes a screen that provides an output interface between the second electronic device 900 and a user. In some examples, the screen may include a liquid crystal display (LCD) and a touch panel (TP). If the screen includes the touch panel, the screen can be implemented as a touch screen to receive an input signal from the user. The touch panel includes one or more touch sensors, so as to sense a touch, a swipe and a gesture on the touch panel. The touch sensor can not only sense a boundary of a touch or a swipe, but also measure duration and pressure associated with the touch or the swipe. In some examples, the second multi-media component 908 includes a front-facing camera and/or a rear-facing camera. When the second electronic device 900 is in an operating mode, such as a photographing mode or a video mode, the front-facing camera and/or the rear-facing camera may receive external multi-media data. Each of the front-facing camera and the rear-facing camera may be a fixed optical lens system or have focusing and optical zooming capabilities.

The second audio component 910 is configured to output and/or input an audio signal. For instance, the second audio component 910 includes a microphone (MIC). When the second electronic device 900 is in an operating mode, such as a call mode, a recording mode, and a voice recognition mode, the microphone is configured to receive an external audio signal. The received audio signal may be further stored in the second memory 904 or transmitted by the second communication component 916. In some examples, the second audio component 910 further includes a loudspeaker for outputting the audio signal.

The second input/output interface 912 provides an interface between the second processing component 902 and peripheral interface modules, which may be keyboards, click wheels, buttons, etc. These buttons may include but are not limited to a home button, a volume button, a start button and a lock button.

The second sensor component 914 includes one or more sensors for providing state assessment of various aspects of the second electronic device 900. For instance, the second sensor component 914 may detect an open/closed state of the second electronic device 900, and relative positioning of components, such as a display and a keypad of the second electronic device 900. The second sensor component 914 may further detect a position change of the second electronic device 900 or a component of the second electronic device 900, presence or absence of contact between a user and the second electronic device 900, an orientation or acceleration/deceleration of the second electronic device 900, and a temperature change of the second electronic device 900. The second sensor component 914 may include a proximity sensor configured to detect the presence of a nearby object in the absence of any physical touch. The second sensor component 914 may further include a light sensor, such as a complementary metal oxide semiconductor (CMOS) and a charge coupled device (CCD) image sensor, which are used in imaging applications. In some examples, the second sensor component 914 may further include an acceleration sensor, a gyroscopic sensor, a magnetic sensor, a pressure sensor, or a temperature sensor.

The second communication component 916 is configured to facilitate wired or wireless communication between the second electronic device 900 and other devices. The second electronic device 900 may access a wireless network based on a communication standard, such as WiFi, 2G, 3G, and their combinations. In an example, the second communication component 916 receives a broadcast signal or broadcast related information from an external broadcast management system through a broadcast channel. In an example, the second communication component 916 further includes a near-field communication (NFC) module to promote short-range communication. For instance, the NFC module may be implemented based on a radio frequency identification (RFID) technology, an infrared data association (IrDA) technology, an ultra wideband (UWB) technology, a Bluetooth (BT) technology, and other technologies.

In an example, the second electronic device 900 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic elements, which are configured to execute the above method for processing interactive information applied to the second electronic device.

In an example, a non-transitory computer-readable storage medium including instructions is further provided, such as a second memory 904 including instructions. The above instructions may be executed by the second processor 920 of the second electronic device 900, so as to complete the above method for processing interactive information applied to the second electronic device. For instance, the non-transitory computer-readable storage medium may be an ROM, a random access memory (RAM), a compact disc read-only memory (CD-ROM), a magnetic tape, a floppy disk, an optical data storage device, etc.

In another example, a computer program product is provided. The computer program product includes a computer program capable of being executed by a programmable apparatus. The computer program has a code portion, which is configured to execute the above method for processing interactive information applied to the first electronic device when executed by the programmable apparatus.

In yet another example, a computer program product is provided. The computer program product includes a computer program capable of being executed by a programmable apparatus. The computer program has a code portion, which is configured to execute the above method for processing interactive information applied to the second electronic device when executed by the programmable apparatus.

Those skilled in the art will further know that various illustrative logical blocks and steps listed in examples of the application may be implemented by electronic hardware, computer software, or their combinations. Whether such functions are implemented by hardware or software depends on particular application and design requirements of the entire system. Those skilled in the art may implement functions through various methods for each type of specific application. However, such implementation may not be understood as falling beyond the scope of protection of examples of the application.

In addition, the word "illustrative" is used to indicate an instance, an example and an illustration. Any aspect or design described as "illustrative" may not be understood as being advantageous compared with other aspects or designs. On the contrary, the word "illustrative" is configured to present a concept in a concrete manner. As used here, the term "or" is intended to mean inclusive "or" rather than exclusive "or". That is, unless otherwise specified, or clear in context, "X applies A or B" is intended to mean any of natural inclusive permutations. That is, if X applies A; X applies B; or X applies both A and B, then "X applies A or B" is satisfied in any of the foregoing examples. In addition, unless otherwise specified or clearly referring to a singular form in context, the articles "a" and "an" used in the application and the appended claims are generally understood as denoting "one or more".

Similarly, although the invention is shown and described with respect to one or more implementations, those skilled in the art can conceive equivalent variations and modifications upon reading and understanding the description and accompanying drawings. The invention includes all such modifications and variations, and is limited by the scope of the claims. Particularly with regard to various functions executed by the components (such as elements and resources) described above, unless otherwise indicated, the terms configured to describe such components are intended to correspond to any components (which are functionally equivalent), even though not structurally equivalent to the disclosed structure performing specified functions of the described components. In addition, although a particular feature of the invention is disclosed with respect to only one of a plurality of implementations, as being desired and advantageous for any given or particular application, such a feature can be combined with one or more other features of the other implementations. In addition, the terms "comprise," "possess," "provided with," "have," or their variations used in particular examples or claims are intended to be inclusive like the term "include".

Those skilled in the art could easily conceive of other implementation solutions of the invention upon consideration of the description and the invention disclosed in the implementation. The description and examples are regarded as illustrative.

It may be understood that the invention is not limited to a precise structure described above and shown in accompanying drawings, and can have various modifications and changes without departing from the scope of the invention. The scope of the invention is limited by the appended claims.

In the above detailed description, with reference to the figures, particular aspects that can practice the invention are shown by way of illustration. In this regard, the terms indicating directions or denoting positional relations, such as "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," "circumferential," etc. may be used with reference to orientations of the described figures. Since the components of the described devices may be positioned in a plurality of different orientations, the directional terms may be used for illustrative purposes rather than limitative purposes. It may be understood that other aspects may be utilized, and structural or logical changes may be made without departing from the concepts of the invention. The following detailed descriptions may not be regarded as being limiting.

It may be understood that unless specifically indicated otherwise, various features of some examples of the inventions described here can be combined with one another. As used here, the term "and/or" includes any one of the associated listed items and any combination of any two or more. Similarly, "at least one of..." includes any one of the associated listed items and any combination of any two or more.

It may be understood that unless otherwise explicitly specified and defined, the terms "join," "attach," "mount," "connected to," "connection," "fix," etc. used in examples of the invention may be understood in a broad sense. For instance, they can denote a fixed connection, a detachable connection, or an integrated connection, denote a mechanical connection, an electrical connection, or mutual communication, denote a direct connection, or an indirect connection via an intermediate medium, or denote communication of interiors of two elements or interconnection of two elements, unless explicitly defined otherwise. The specific meanings of the above terms can be understood by those of ordinary skill in the art according to specific circumstances.

In addition, the term "on" used in an expression of a component, element, or material layer formed "on" a surface or located "on" a surface may be used here to denote that the component, element, or material layer is "indirectly" positioned (for instance, placed, formed, and deposited) on the surface, such that one or more additional components, elements, or layers are arranged between the surface and the component, element, or material layer. However, the term "on" used in an expression of a component, element, or material layer formed "on" a surface or located "on" a surface may optionally have a specific meaning: the component, element, or material layer is "directly" positioned (for instance, placed, formed, and deposited) on the surface, for instance, in direct contact with the surface.

Although the terms such as "first," "second" and "third" may be used here to describe various members, components, regions, layers, or sections, these members, components, regions, layers, or sections are not limited by these terms. On the contrary, these terms are configured to distinguish one member, component, region, layer, or section from another member, component, region, layer, or section. A first member, component, region, layer, or section mentioned in instances described here may also be referred to as a second member, component, region, layer, or section without departing from the teachings of the instances. In addition, the terms "first" and "second" are used for descriptive purposes, and cannot be understood as indicating or implying relative importance or implicitly indicating the number of technical features indicated. A feature defined with "first" or "second" may explicitly or implicitly include at least one of the features. In descriptions, "plurality of' means at least two, for instance, two and three, unless otherwise explicitly and specifically defined.

It may be understood that spatially relative terms, such as "above," "upper portion," "below," and "lower portion," are used here to describe a relation between one element and another element, as shown in the figures. Such spatially relative terms are intended to include different orientations of an apparatus in use or operation in addition to orientations described in the figures. For instance, if the apparatus in the figures is turned over, an element described as being located "above" or at an "upper portion" relative to another element would then be located "below" or at a "lower portion" relative to the other element. Depending on the spatial orientation of the apparatus, the term "above" includes two orientations of being located above and below another element. The apparatus may be oriented in other ways (for instance, rotated 90 degrees or located in other orientations), and spatially relative terms used here may be interpreted accordingly.

## Claims

1. A method for processing interactive information, wherein a display interface (10) of a first electronic device (800) comprises at least a target window (100) for displaying a mirror image (40) of a second electronic device (900), the method comprising:
controlling (S101), when the second electronic device (900) satisfies a screen lock condition, the target window (100) to enter a screen-off state, wherein the second electronic device (900) synchronously enters a screen-off state when satisfying the screen lock condition; and
displaying (S102) the mirror image (40) by controlling, in response to detecting a touch operation (60) on the target window (100), the target window (100) to exit the screen-off state.

2. The method according to claim 1, further comprising:
starting (S43) a first virtual screen lock service locally on the first electronic device (800) when the first electronic device (800) is connected to the second electronic device (900);
wherein controlling the target window (100) to enter the screen-off state comprises:
controlling (S47) the target window (100) to enter the screen-off state by calling (S46) the first virtual screen lock service.

3. The method according to claim 2, further comprising:
performing, when the first electronic device (800) is disconnected from the second electronic device (900), at least one of the following operations:
closing (S421) the first virtual screen lock service; or
controlling (S421) the target window (100) to stop displaying the mirror image (40).

4. The method according to any one of claims 1-3, further comprising:
sending (S410), in response to detecting the touch operation (60), a first instruction to the second electronic device (900), wherein the first instruction is configured to instruct the second electronic device (900) to exit the screen-off state.

5. The method according to any one of claims 1-4, further comprising:
displaying (S417) the mirror image (40) by controlling (S416), in response to receiving a second instruction sent by the second electronic device (900), the target window (100) to exit the screen-off state, wherein the second instruction is configured to instruct the target window (100) to exit the screen-off state.

6. A method for processing interactive information, wherein a second electronic device (900) is connected to a first electronic device (800), a display interface (10) of the first electronic device (800) comprises at least a target window (100) for displaying a mirror image (40) of the second electronic device (900), the method comprising:
controlling (S201), when the second electronic device (900) satisfies a screen lock condition, the second electronic device (900) to enter a screen-off state.

7. The method according to claim 6, further comprising:
starting (S44) a second virtual screen lock service locally on the second electronic device (900) when the second electronic device (900) is connected to the first electronic device (800); wherein
controlling the second electronic device (900) to enter the screen-off state comprises:
controlling (S49) the second electronic device (900) to enter the screen-off state by calling (S48) the second virtual screen lock service.

8. The method according to claim 7, further comprising:
performing, when the second electronic device (900) is disconnected from the first electronic device (800), at least one of the following operations:
closing (S423) the second virtual screen lock service; or
controlling (S423), in a case that the second electronic device (900) is in the screen-off state, the second electronic device (900) to enter a screen-locked state.

9. The method according to any one of claims 6-8, further comprising:
controlling (S412), in response to receiving a first instruction sent by the first electronic device (800), the second electronic device (900) to exit the screen-off state, wherein the first instruction is configured to instruct the second electronic device (900) to exit the screen-off state.

10. The method according to any one of claims 6-9, further comprising:
unlocking (S413), in response to detecting an unlocking operation (90) on the second electronic device (900) when the second electronic device (900) is in the screen-off state, the second electronic device (900); and
sending (S415) a second instruction to the first electronic device (800) in a case that the second electronic device (900) is successfully unlocked, wherein the second instruction is configured to instruct the target window (100) to exit the screen-off state.

11. A computer-readable storage medium, storing a computer program, wherein when the computer program is executed by a processor, the steps of the method according to any one of claims 1-10 are implemented.

12. A computer program product, comprising a computer program, wherein when the computer program is executed by a processor, the steps of the method according to any one of claims 1-10 are implemented.

13. A first electronic device (800), comprising:
a first processor (820); and
a first memory (804) configured to store executable instructions of the first processor (820); wherein
the first processor (820) is configured to execute the executable instructions in the first memory (804), so as to implement steps of the method according to any one of claims 1-5.

14. A second electronic device (900), comprising:
a second processor (920); and
a second memory (904) configured to store executable instructions of the second processor (920); wherein
the second processor (920) is configured to execute the executable instructions in the second memory (904), so as to implement steps of the method according to any one of claims 6-10.
